# EUROPÄISCHE PATENTSCHRIFT

(11) **EP 1 143 234 B1**
(45) Veröffentlichungstag und Bekanntmachung des Hinweises auf die Patenterteilung: **04.01.2006**
(21) Anmeldenummer: 01105683.5
(22) Anmeldetag: 07.03.2001
(51) Int. Cl.: G01N 21/31, G01N 21/71

(54) **Verfahren und Vorrichtung zum Nachweisen von Quecksilber**
Method and device for detecting mercury
Procédé et appareil de dépistage du mercure

(30) Priorität: 08.03.2000 DE 10011171
(43) Veröffentlichungstag der Anmeldung: 10.10.2001
(73) Patentinhaber: Perkin Elmer Bodenseewerk Zweigniederlassung der Berthold GmbH & Co. KG, 88662 Überlingen (DE)
(72) Erfinder: Tyson, Julian F.Dr., Dept. of Chemistry, Room 701, Massachusetts, Amherst, MA 01003-4510 (US); Schlemmer, Gerhard, Dr., 88696 Owingen (DE); Palmer, Christopher, Dr., Albany, NY 12203 (US)
(74) Vertreter: Grünecker, Kinkeldey, Stockmair & Schwanhäusser Anwaltssozietät

(56) Entgegenhaltungen:
- DE-A- 3 830 504
- DE-A- 3 919 042

## Beschreibung

Die vorliegende Erfindung betrifft ein Verfahren und eine Vorrichtung zum Nachweisen von Quecksilber in einer Probenlösung, die das Quecksilber in kationischer Form und als organische Verbindung enthält, mittels einer Nachweisvorrichtung, die eine Atomspektroskopievorrichtung mit einer zum Nachweisen von Quecksilbergas geeigneten Messzelle, eine Edelmetallanreicherungsvorrichtung zur Konzentrierung des Quecksilbers und eine Kontrolleinheit umfaßt, wobei das Quecksilber in die Gasphase überführt wird und mittels der Edelmetallanreicherungsvorrichtung anreicherbar ist.

Quecksilber gehört zu den Elementen, die für Mensch und Tier in sehr niedrigen Konzentrationen toxisch wirken. Es besteht daher die Notwendigkeit Quecksilberkonzentrationen bereits in sehr geringer Dosis nachzuweisen. Dabei sind neben der Gesamtkonzentration des Quecksilbers insbesondere auch die chemischen Spezies von Bedeutung, in denen das Quecksilber in der zu bestimmenden Probe auftritt. Als eine der häufigsten auftretenden Spezies, die darüber hinaus eine äußerst toxische Wirkung aufweist, gilt dabei Methylquecksilber.

Der Nachweis von Quecksilber findet in herkömmlichen Verfahren und Vorrichtungen beispielsweise mittels der optischen Atomspektrometrie in Form der Atomabsorptionsspektrometrie, Atomfluoreszenzspektrometrie, Atomemissionspektrometrie oder Massenspektrometrie statt. Dabei wird das in einer zu untersuchenden Lösung in kationischer Form oder als Organo-Quecksilberverbindung vorliegende Quecksilber beispielsweise mit der sogenannten Kaltdampftechnik bestimmt. Hierzu wird das Quecksilber aus der Lösung durch Reduktion in ein atomares Gas bzw. Dampf überführt, wodurch dann der Quecksilbernachweis meßtechnisch durch eines der obengenannten Verfahren geführt werden kann.

Zur Steigerung des Nachweisvermögens können andere Komponenten in der Lösung ausgesondert werden. Eine zusätzliche Steigerung der Empfindlichkeit beim Nachweis erreicht man, indem das erzeugte Quecksilbergas zunächst über ein Netz aus einer Edelmetallegierung geleitet und durch Amalgamierung angereichert wird. Anschließend wird das dem Netz anhaftende Quecksilber durch Aufheizen des Netzes als Quecksilbergas freigesetzt und der Messung zugeführt. Eine derartige Vorrichtung und ein derartiges Verfahren sind aus DE 3919042 bekannt, die den Oberbegriff der unabhängigen Ansprüche offenbart.

Mit diesen Verfahren ist eine Bestimmung des Gesamtquecksilbergehalts möglich, wobei allerdings für die separate Bestimmung von zum Beispiel Methylquecksilber eine vorhergehende Auftrennung in Spezies erforderlich ist. Diese Auftrennung erfolgt üblicherweise in einem chromatographischen Verfahren oder über gekühlte Kondensationsfallen. Dies erfordert allerdings eine Trenneinheit und eine Detektionseinheit sowie einen erheblichen Mehraufwand an Probenvorbereitung, um diese separate Bestimmung des Methylquecksilbergehalts und des Gesamtquecksilbergehalts durchzuführen.

Femer ist auch ein Verfahren denkbar, das sich der Tatsache bedient, dass kationisches Quecksilber mit milden Reduktionsmitteln und bestimmte Organo-Quecksilberverbindungen nur mit relativ starken Reduktionsmitteln in die Dampf- bzw. Gasphase überführt werden können. Zwar bietet dieses Verfahren hinsichtlich der Einfachheit der Probenvorbereitung einen Vorteil gegenüber dem zuvor erwähnten Verfahren. Zur aufeinanderfolgenden Bestimmung des Gesamtquecksilbergehalts und des Methylquecksilbergehalts müssen jedoch zwei separate Reaktionseinheiten eingesetzt werden, da sich die beiden Reduktionsmittel gegenseitig beeinflussen. Zudem erweist es sich in der Praxis, dass durch die Verwendung zweier Reduktionsmittel und zweier Reaktionseinheiten die experimentellen Parameter sich nicht so kontrollieren lassen, um die Bestimmung des Quecksilbergehalts mit der erforderlichen Genauigkeit und Reproduzierbarkeit durchführen zu können.

Es ist daher eine Aufgabe der vorliegenden Erfindung, ein Verfahren und eine Vorrichtung bereitzustellen, die mittels einer einfachen Probenbehandlung eine zuverlässige Bestimmung des Gesamtquecksilbergehalts und des Quecksilbergehalts in organischer Verbindung ermöglicht.

Erfindungsgemäß wird diese Aufgabe erfüllt, indem ein Verfahren der eingangs genannten Art bereitgestellt wird, wobei die Kontrolleinheit die Zuführung des Quecksilbergases in die Messzelle so steuert, dass zusätzlich zu der Messung des angereicherten Quecksilbers Quecksilbergas der gleichen Probe ohne Durchlaufen des Anreicherungsschritts in die Messzelle zur Messung eingeleitet wird.

Die Erfindung beruht dabei auf der Erkenntnis der Erfinder, dass bei der Überführung des Quecksilbers in die Gasphase, beispielsweise durch Reduktion mit Natriumborhydrid, nicht nur kationisches Quecksilber in die Gasphase überführt wird, sondern auch Organoquecksilber wie etwa Methylquecksilber als gasförmige Verbindung freigesetzt wird. Das aus dem kationischen Quecksilber gebildete gasförmige Quecksilber kann dabei direkt in einer Messzelle nachgewiesen werden. Die aus dem Methylquecksilber entstandene gasförmige Verbindung ruft jedoch keine spezifische Atomabsorption oder Atomfluoreszenz während dieser Messung hervor. Auch bei Behandlung der Probenlösung in der Weise, dass nicht nur aus dem kationischen bzw. anorganischen Quecksilber gasförmiges Quecksilber, sondern auch eine gasförmige Verbindung des Organoquecksilbers (Methylquecksilbers) entsteht, ergibt eine Messung in der Messzelle daher dennoch ausschließlich den Gehalt an kationischem Quecksilber in der Probe.

Die erzeugten gasförmigen Verbindungen können auf der Anreicherungsvorrichtung, beispielsweise einem Edelmetallnetz oder einem edelmetallbeschichteten Sand, aufgefangen und amalgamiert werden. Unter dem katalytischen Einfluß des Edelmetalls zersetzen sich die organischen gasförmigen Quecksilberverbindungen. Nach dem Freisetzen des Quecksilbers aus der Anreicherungsvorrichtung und anschließendem Einleiten in die Messzelle wird somit die Summe aus anorganischem (kationischem) und organischem Quecksilber erfaßt. Dadurch ist es möglich den Gehalt an organischem Quecksilber und den Gehalt des Gesamtquecksilbers mittels zweier aufeinanderfolgender Meßschritte zu bestimmen, wobei lediglich eine einfache Probenvorbereitung erforderlich ist.

Vorteilhafterweise wird das in der Probenlösung enthaltene Quecksilber durch Reduktion in die Gasphase überführt. Damit lassen sich bekannte Vorrichtungen zum Reduzieren der Probe im erfindungsgemäßen Verfahren verwenden, wodurch sich der apparative Aufwand verringert.

In einer vorteilhaften Weiterbildung der Erfindung wird die das Quecksilber enthaltende Probe mit Natriumborhydrid reduziert.

Bei den von den Erfindern durchgeführten Versuchen zeigte sich, dass insbesondere die mit der Reduktion von Natriumborhydrid gewonnenen gasförmigen Quecksilberverbindungen ein zuverlässiges Bestimmen des anorganischen bzw. kationischen sowie des Gesamtquecksilbergehalts ermöglichen.

In einer weiteren vorteilhaften Weiterbildung wird das Quecksilbergas ohne Durchlaufen des Anreicherungsschritts in die Messzelle eingeleitet, wenn die Kontrolleinheit bei der vorhergehenden Messung des angereicherten Quecksilbergases aus der Anreicherungsvorrichtung das Überschreiten eines vordefinierten Schwellwerts detektiert hat.

Durch die Vorgabe eines Schwellwertes, sowie der automatischen Überwachung dieses Schwellwertes wird eine zügige Messung gewährleistet, da lediglich der zweite Meßschritt zum Bestimmen des anorganischen Quecksilbergehalts durchgeführt wird, wenn ein zulässiger Gesamtquecksilbergehalt überschritten ist.

Vorteilhafterweise ermittelt die Kontrolleinheit aus dem Meßergebnis der beiden Messungen ein Gesamtergebnis.

Damit ist es nicht nur möglich, automatisch den Gesamtquecksilbergehalt sowie den Anteil an anorganischem Quecksilber in einer Probe zu bestimmen, sondern auch unter Berücksichtigung der beiden Meßergebnisse automatisch den Gehalt an organischen Quecksilberverbindungen zu ermitteln.

Vorteilhaft lässt sich das Verfahren anwenden, wenn die organische Quecksilberverbindung Methylquecksilber enthält.

Das erfindungsgemäße Verfahren erlaubt es damit, eine Quecksilber enthaltende Probe in einfacher Weise aufzubereiten und dabei gleichzeitig den Anteil des äußerst toxischen Methylquecksilber sowie des Gesamtquecksilberanteils zu bestimmen.

Erfindungsgemäß wird ebenfalls eine Vorrichtung zum Nachweis von Quecksilber in einer Lösung bereitgestellt mit einem Gasphasenbereich, in dem das Quecksilber in der Lösung in die Gasphase überführbar ist, einer Anreicherungsvorrichtung zur Anreicherung des Quecksilbers, einer Atomspektroskopievorrichtung mit einer zum Nachweis von Quecksilber geeignet ausgebildeten Messzelle, einer zum Einleiten des Quecksilbergases in die Messzelle dienenden Zufuhrleitung, und einer mit der Messzelle in Verbindung stehenden Kontrolleinheit, wobei sich die Vorrichtung dadurch auszeichnet, dass in der Zufuhrleitung ein mit der Kontrolleinheit in Verbindung stehendes steuerbares Ventilelement derart vorgesehen ist, dass das Quecksilbergas der gleichen Probenlösung in Abhängigkeit von der Kontrolleinheit, wahlweise von dem Gasphasenbereich mit und unter Ausschluß der Anreicherungsvorrichtung in die Messzelle einleitbar ist.

Damit ist diese erfindungsgemäße Vorrichtung besonders zum Ausführen des erfindungsgemäßen Verfahrens geeignet, da das Ventilelement ein gesteuertes Einleiten eines Probengases wahlweise aus der Anreicherungsvorrichtung oder dem Gasphasenbereich zuläßt.

Weiterhin betrifft die vorliegende Erfindung eine Vorrichtung zum Nachweis von Quecksilber in einer Lösung mit einem Gasphasenbereich, in dem das Quecksilber in der Lösung in die Gasphase überführbar ist, einer Anreicherungsvorrichtung zur Anreicherung des Quecksilbers, einer Atomspektroskopievorrichtung mit einer zum Nachweisen von Quecksilbergas aus der Anreicherungsvorrichtung geeignet ausgebildeten ersten Messzelle, einer zum Einleiten des Quecksilbergases in die erste Messzelle dienenden Zufuhrleitung, und einer mit der ersten Messzelle in Verbindung stehenden Kontrolleinheit, wobei sich die Vorrichtung erfindungsgemäß dadurch auszeichnet, dass die Vorrichtung eine zweite Messzelle umfaßt, die mit der Kontrolleinheit kommuniziert und von dieser steuerbar mit Quecksilbergas direkt unter Ausschluß der Anreicherungsvorrichtung aus dem Gasphasenbereich beaufschlagbar ist.

Die Bereitstellung einer zweiten direkt aus dem Gasphasenbereich mit Quecksilbergas beaufschlagbare Messzelle eignet sich insbesondere für das zuvor erwähnte erfindungsgemäße Verfahren, wobei eine erhöhte Meßgeschwindigkeit erzielt werden kann, indem beispielsweise während der Messung in der einen Messzelle an der anderen Messzelle Referenz- bzw. Kalibriermessungen durchgeführt werden können, um somit bei hoher Messgeschwindigkeit dennoch eine hohe Messgenauigkeit zu erhalten.

Vorteilhafterweise umfasst der Gasphasenbereich einen Reduktionsbereich, in dem das Quecksilber durch Reduktion in die Gasphase überführbar ist.

Damit lassen sich bekannte Reduktionsvorrichtungen in der erfindungsgemäßen Vorrichtung verwenden und führen so zu einer kostengünstigen Gesamtlösung.

Vorteilhafterweise ist die Kontrolleinheit geeignet ausgebildet, um aus der Messung des Quecksilberanteils des Gases, das aus der Anreicherungsvorrichtung eingespeist wird, und der Messung des Quecksilberanteils, der aus dem Gasphasenbereich eingespeist wird, einen Gesamtwert aus beiden Messungen zu bilden.

Bei der Ermittlung dieses Gesamtwerts aus beiden Meßvorgängen wird die unterschiedliche Vorbehandlung des Quecksilbergases, wenn es aus der Anreicherungsvorrichtung bzw. direkt aus dem Gasphasenbereich eingespeist wird, berücksichtigt. Femer kann die Kontrolleinheit ständig eine Referenzmessung in der bzw. den Messzellen veranlassen, um eine Verschiebung experimenteller Parameter bei der Auswertung und Zusammenfassung der einzelnen Messungen mit einzubeziehen.

Eine weitere Ausführungsform ergibt sich in Kombination mit der in der DE 44 11 441 offenbarten Vorrichtung eines Atomabsorptionsspektrometers, in dem die Messzelle wenigstens zwei verbindbare, jeweils von dem Lichtstrahl durchstrahlbare Kammern aufweist, deren Lichtabsorptionswege jeweils in einem bestimmten Verhältnis zueinander stehen.

Aufgrund der Unterteilung der Messzelle in wenigstens zwei verbindbare, getrennte Kammern ist es möglich, unterschiedliche Lichtabsorptionswege für die auf ihren Quecksilbergehalt hin zu untersuchenden Probensubstanz herzustellen. So könnte die Kammer mit dem längeren Lichtabsorptionsweg für den Nachweis des Quecksilbers dienen, das direkt aus dem Gasphasenbereich in die Messzelle eingeleitet wird, um damit eine höhere Nachweisempfindlichkeit zu erreichen, im Vergleich zur Probe, die aus der Anreicherungsvorrichtung in die Messzelle eingeleitet wird.

Femer ist es auch vorteilhaft, die zweite Messzelle durch Unterteilung in getrennte Kammern oder durch geeignete Wahl der Länge, und damit der Absorptionslänge, dem Verhalten der ersten Messzelle, in die das Quecksilber aus der Anreicherungsvorrichtung eingeleitet wird, anzupassen. Durch diese Maßnahme lassen sich die Genauigkeit der Messung sowie des Gesamtergebnisses deutlich steigern.

Vorteilhafterweise sind die Kammern in den Messzellen über Schaltventile, die von der Kontrolleinheit steuerbar sind, verbindbar. Damit lässt sich eine automatische, den entsprechenden Messbedingungen angepasste Lichtabsorptionslänge des Spektrometers einstellen.

Weitere vorteilhafte Ausführungsformen gehen aus den Unteransprüchen hervor.

Im folgenden wird die Erfindung anhand bevorzugter Ausführungsbeispiele mit Bezug zu den Zeichnungen erläutert. In den Zeichnungen zeigen:
- Fig. 1: eine schematische Darstellung einer Ausführungsform der erfindungsgemäßen Erfindung zum Nachweis von Quecksilber;
- Fig. 2: eine schematische Darstellung einer weiteren Ausführungsform der Vorrichtung mit einer Messzelle mit zwei getrennten Kammern; und
- Fig. 3: eine schematische Darstellung einer weiteren Ausführungsform der erfindungsgemäßen Vorrichtung mit einer zweiten Messzelle.

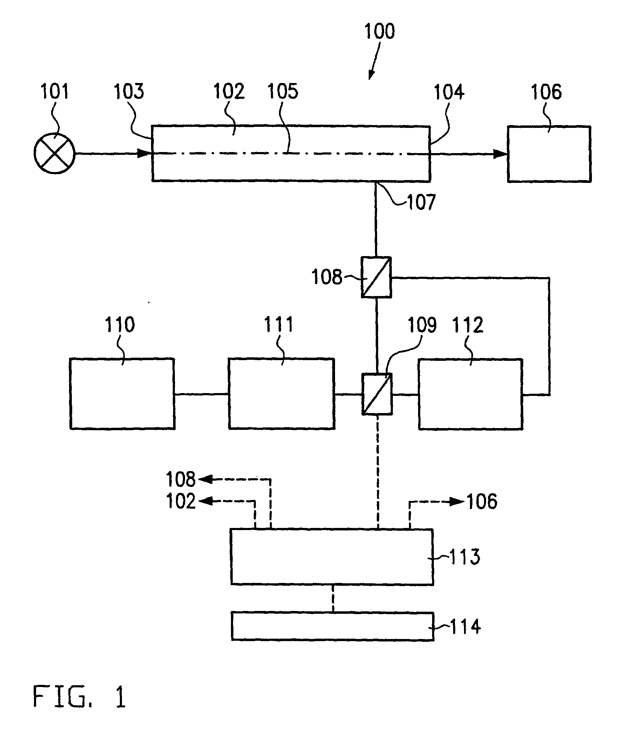

In Fig. 1 ist eine Ausführungsform einer erfindungsgemäßen Vorrichtung 100 zum Nachweis von Quecksilber dargestellt. Die Vorrichtung 100 umfaßt eine Lichtquelle 101, eine Messzelle 102 und eine Lichtnachweisvorrichtung 106, die entlang einer optischen Achse 105 angeordnet sind. Die Lichtquelle 101, die Messzelle 102 und die Lichtnachweisvorrichtung 106 bilden ein Atomabsorptionsspektrometer. Die Lichtquelle 101 beinhaltet beispielsweise eine Quecksilber-Niederdruckentladungslampe, die eine intensive Strahlung bei den Emissions- und Absorptionslinien des Quecksilbers erzeugt. Bei der Lichtnachweisvorrichtung 106 handelt es sich vorzugsweise um einen elekro-optischen Wandler, der eine Umwandlung von einer auf eine Oberfläche des elekro-optischen Wandlers auftreffenden Strahlungsleistung in ein elektrisches Signal durchführt. Als besonders vorteilhaft erweisen sich dabei Photodioden mit einer beschichteten Photokathode, wobei beispielsweise zur Messung der Intensität der Emissionslinie 184,9 nm eine CsSe-Photokathode und zur Messung der Emissionslinie 253,7 nm eine CsTe-Photokathode vorgesehen sind.

Die Messzelle 102 besteht aus einer länglichen, rohrförmige Kuvette, die längs der optischen Achse 105 angeordnet ist. In Längsrichtung wird die Messzelle 102 von Fenster 103, 104 begrenzt, die für die Absorptionswellenlänge transparent sind. An seiner Seitenwandung der Messzelle 102 ist ein radialer Gasanschluß 107 vorgesehen, der auf der anderen Seite mit einem steuerbaren Dreiwegeventil 108 verbunden ist. An jeweils einen der Eingangsanschlüsse des Dreiwegeventils 108 sind Zuleitungen von einer Quecksilberanreicherungsvorrichtung 112 sowie eines weiteren Dreiwegeventils 109 gekoppelt. Der zweite Ausgang des Dreiwegeventils 109 ist mit der Anreicherungsvorrichtung 112 verbunden. Das Dreiwegeventil 109 ist eingangsseitig mit einem Reduktionsbereich 111 verbunden, der wiederum eine Fluidverbindung zu einem Probenbehälter 110 aufweist, in dem eine Quecksilberlösung in aufbereiteter Form vorliegt.

Eine Kontrolleinheit 113, die beispielsweise als Mikroprozessorsteuerung oder als Personal Computer mit geeigneter Peripherie ausgebildet sein kann, ist elektrisch mit den Dreiwegeventilen 108 und 109 sowie der Lichtnachweisvorrichtung 106 verbunden. Die Kontrolleinheit 113 umfaßt ferner ein Anzeige/Ausgabeelement 114, in welcher Informationen visuell, akustisch, in gedruckter Form oder in einer beliebigen geeigneten Weise dargestellt werden können.
Ferner soll darauf hingewiesen werden, dass an Stelle eines Dreiwegeventils jedes andere geeignete Ventilelement verwendet werden kann. Es ist auch möglich, die Messzelle mit zwei Zuleitungen jeweils aus dem Reduktionsbereich und der Anreicherungsvorrichtung mit entsprechenden Schaltventilen vorzusehen, so dass die Kontrolleinheit die Messzelle wahlweise mit Probengas aus dem Reduktionsbereich bzw. aus der Anreicherungsvorrichtung beaufschlagen kann.

Zum Betreiben der Vorrichtung 100 wird dem Probenbehälter 110 eine zu untersuchende Lösung der Probe zugeführt. Die Probenlösung kann dabei zuvor durch geeignete, bekannte Vorrichtungen, wie beispielsweise Chromatographiesäulen oder gekühlte Kondensationsfallen in Spezies aufgetrennt werden. Die Probenlösung wird anschließend dem Reduktionsbereich 111 zugeführt, in dem mittels eines Reduktionsmittels, in diesem Falle Natriumborhydrid, eventuell vorhandenes Quecksilber in der Lösung reduziert wird. Bei der Reduktion bildet sich aus dem kationischen Quecksilber in der Probenlösung bereits bei Raumtemperatur gasförmiges Quecksilber sowie eine gasförmige, Methylquecksilber enthaltende Verbindung. Die Überführung in die Gasphase kann auch in einem Gasphasenbereich ohne Reduktionsbereich, beispielsweise durch Aufheizen der Lösung, durchgeführt werden.

Im weiteren Meßvorgang steuert die Kontrolleinheit 113 das Dreiwegeventil 109 so, dass das entstandene Gas in die Anreicherungsvorrichtung 112 gelangt. Die Anreicherungsvorrichtung 112 umfaßt im wesentlichen ein Edelmetall, das zur Vergrößerung der Oberfläche in Form eines Netzes oder z.B. auf Sand aufgedampft ist, und auf dessen Oberfläche sich das gasförmige Quecksilber anlagert. Unter dem katalytischen Einfluß des Edelmetalls zersetzt sich dabei die gasförmige Methylquecksilberverbindung und nach Ausheizen des Edelmetalls entsteht ein konzentriertes Quecksilbergas, das sowohl das ursprünglich in organischen Verbindungen vorliegende Quecksilber sowie auch das anorganische Quecksilber enthält. Über eine Fluidleitung gelangt das angereicherte Quecksilbergas in das Dreiwegeventil 108, das von der Kontrolleinheit 113 so gesteuert ist, dass über den Anschlußstutzen 107 eine Verbindung zur Messzelle 102 besteht. Anschließend wird eine Absorptionsmessung ausgeführt, die aufgrund der zuvor gegebenen Erläuterung den Gesamtgehalt des Quecksilbers in der Probe ermittelt, da die Organoquecksilberverbindungen und insbesondere das Methylquecksilber während der Anreicherung zersetzt und in eine durch Atomabsorption nachweisbare Form überführt werden. Das Signal aus der Lichtnachweisvorrichtung 106 wird, nachdem es das Probengas durchlaufen hat, von der Kontrolleinheit 113 empfangen und ausgewertet. Vorteilhafterweise wird bei Überschreiten eines vordefinierten Schwellwerts des Gesamtgehalts an Quecksilber, nachdem das Probengas nach der Messung aus der Messzelle 102 entfernt wurde, das Dreiwegeventil 109 von der Kontrolleinheit 113 so geschaltet, dass Probengas aus dem Reduktionsbereich 111 direkt über das ebenfalls geeignet geschaltete Dreiwegeventil 108 in die Messzelle 102 gelangt. In einer weiteren Messung wird der Anteil des kationischen bzw. anorganischen Quecksilbers ermittelt, da insbesondere das ebenfalls in gasförmiger Verbindung vorliegende Methylquecksilber keine spezifische Atomabsorption oder Atomfluoreszenz hervorruft. In dieser Messung wird daher ausschließlich der Gehalt an kationischem Quecksilber ermittelt. Aus dem zuvor ermittelten Gesamtgehalt an Quecksilber in der Probe kann die Kontrolleinheit daher den Anteil an Methylquecksilber der Probe bestimmen. Selbstverständlich kann die Bestimmung des Methylquecksilbers sowie des Gesamtquecksilbers auch unabhängig von der Vorgabe eines Schwellwertes bei jeder Messung durchgeführt werden.

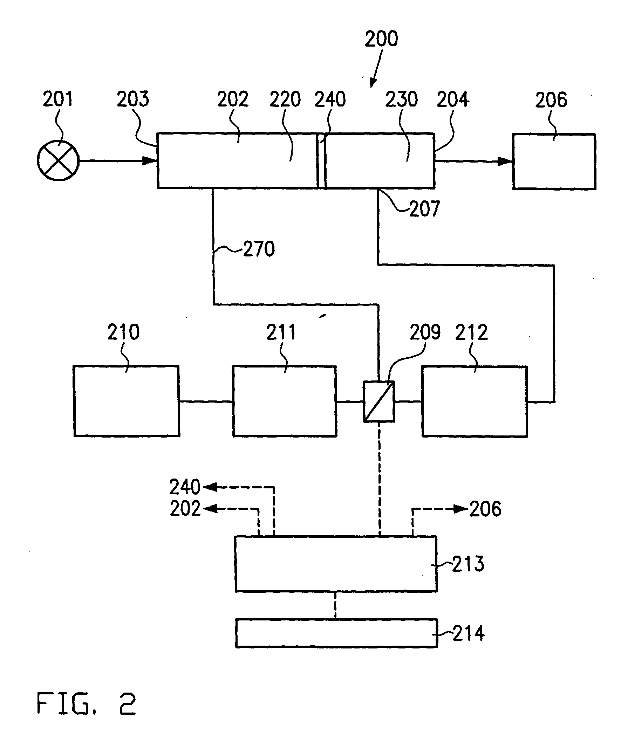

Fig. 2 zeigt eine weitere Ausführungsform einer Vorrichtung 200 zum Nachweisen von Quecksilber. In dieser Figur werden Teile, die identisch sind zu den mit Bezug zu Fig. 1 erläuterten Teilen mit gleichen Bezugszeichen bezeichnet und deren Erläuterung wird weggelassen. Lediglich die führende "1" wird durch eine "2" in dieser Ausführungsform ersetzt. Die Vorrichtung 200 unterscheidet sich von der Vorrichtung 100 im wesentlichen darin, dass die Messzelle 202 zwei getrennte Kammern 220 und 230 aufweist. Die Kammern 220 und 230 werden durch ein Schaltventil 240 voneinander verbindbar getrennt. In dieser Ausführungsform ist die Kammer 220, die den gleichen Durchmesser aufweist wie die Kammer 230, länger und weist daher einen größeren optischen Absorptionsweg auf. Femer ist die Kammer 220 direkt mit dem Dreiwegeventil 209 verbunden, während die Kammer 230 direkt über eine Zufuhrleitung mit der Anreicherungsvorrichtung 212 verbunden ist.

Während des Meßvorgangs steuert die Kontrolleinheit 213 das Dreiwegeventil 209 so, dass der Quecksilbergas aus der Anreicherungsvorrichtung 212 in die Kammer 230 eingeleitet wird. Das Schaltventil 240 wird dabei von der Kontrolleinheit 213 so angesteuert, dass keine Verbindung zur Kammer 220 besteht. Bei der anschließenden Messung wird wiederum, wie zuvor beschrieben wurde, der Gesamtgehalt des Quecksilbers in der Probe bestimmt. In einer weiteren Messung, die beispielsweise wieder durch einen überschrittenen Schwellwert von der Kontrolleinheit 213 initiiert wird, wird nach der Entfemung des Probengases aus der Kammer 203 das Dreiwegeventil 209 so gesteuert, dass das Probengabe direkt aus dem Reduktionsbereich 211 in die Kammer 220 geleitet wird. Das Schaltventil 240 kann dabei wahlweise so gesteuert sein, dass entweder die vollständige Absorptionslänge aus den Kammern 220 und 230 zur Verfügung steht oder nur die Absorptionslänge der Kammer 220. Durch eine geeignete Vorgabe der Länge der Kammern 220 und 230 läßt sich somit eine Anpassung in der Nachweisempfindlichkeit bei den beiden Messungen erreichen. Aus der Messung des direkt aus dem Reduktionsbereich 211 eingeleiteten Probengases läßt sich der Anteil des kationischen Quecksilbers ermitteln. Aus den beiden Meßwerten läßt sich wieder der Gesamtgehalt sowie der Gehalt an Methylquecksilber in der Probe bestimmen.

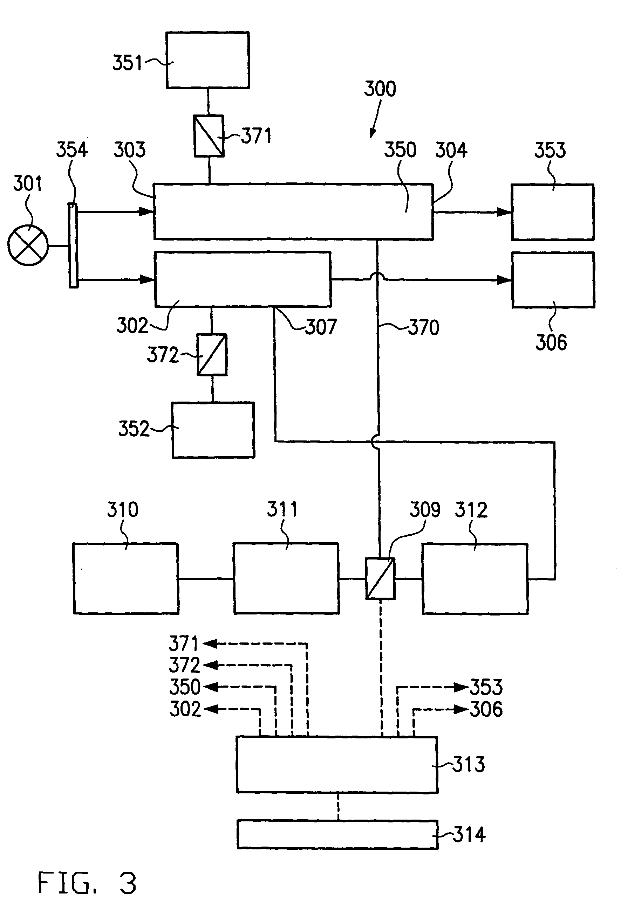

In Fig. 3 ist eine weitere Ausführungsform einer Vorrichtung 300 zum Nachweis von Quecksilber dargestellt. Wiederum werden Elemente, die identisch zur Ausführungsform in Fig. 1 sind mit gleichen Bezugszeichen mit Ausnahme einer führenden "3" anstelle einer "1" gezeigt. Die Vorrichtung 300 weist ein Strahlenteilerelement 354 auf, das das Licht der Lichtquelle 301 in zwei Teilstrahlen aufteilen kann. Ferner umfaßt die Vorrichtung 300 eine zweite Messzelle 350 sowie eine zweite Lichtnachweisvorrichtung 353. Die zweite Messzelle ist über eine Fluidverbindung 370 mit dem Dreiwegeventil 309 verbunden, während die Messzelle 302 über eine entsprechende Leitung mit dem Anschlußstutzen 307 der Anreicherungsvorrichtung 312 verbunden ist. In dieser Ausführungsform weist die zweite Messzelle 350 eine größere Absorptionslänge auf als die Messzelle 302. Beide Messzellen könnten aber auch in gleicher Länge ausgeführt sein, oder eine oder beide Messzellen könnten einen Aufbau mit unterteilten Kammern aufweisen, wie dies mit Bezug zu Fig. 2 erläutert wurde. Ferner ist die zweite Messzelle 350 mit einem Referenzbehälter 351 verbunden, wodurch über ein steuerbares Ventil 371 eine Referenzprobe in die Messzelle einleitbar ist. In entsprechender Weise ist ein Referenzbehälter 352 für die Messzelle 302 mit einem steuerbaren Ventil 372 vorgesehen.

Die Messung des Quecksilbergehalts der Probe kann in ähnlicher Weise durchgeführt werden, wie dies in Bezug zu den Fig. 1 und 2 bereits erläutert wurde. Femer bietet diese Ausführungsform durch die Bereitstellung einer zweiten Messzelle die Möglichkeit, während einer Messung in der einen Zelle eine Referenzmesssung in der anderen Messzelle durchzuführen, so dass insgesamt sich bei erhöhter Genauigkeit eine reduzierte Gesamtmeßzeit ergibt. Die Kontrolleinheit 313 steuert dazu die entsprechenden Ventilelemente 371, 372 so, dass die Zufuhr von Referenzproben aus den Behältern 351 und 352 in Übereinstimmung mit dem Meßablauf stattfindet. Femer ist sie in der Lage, gleichzeitig die Signale aus den Lichtnachweisvorrichtungen 353 und 306 zu verarbeiten und bei der Ermittlung des Meßergebnisses mit einzubeziehen.

In den zuvor beschriebenen Ausführungsformen wurde das erfindungsgemäße Verfahren bzw. die erfindungsgemäßen Vorrichtungen in Zusammenhang mit Atomabsorptionsspektroskopie beschrieben. Selbstverständlich läßt sich die vorliegende Erfindung in einem Verfahren bzw. einer Vorrichtung implementieren, in dem der Nachweis mittels Atomfluoreszenz erfolgt. Dabei bleiben die Lichtquelle und die Lichtnachweisvorrichtung unverändert, da die Detektion ebenfalls wellenlängenspezifisch erfolgt. Lediglich die Ausführung der Messzelle sowie die Anordnung der Lichtnachweisvorrichtung ist dahingehend anzupassen, dass die Detektion unter einem gewissen Winkel zum eingestrahlten Licht erfolgen kann.

## Patentansprüche

1. Verfahren zum Nachweisen von Quecksilber in einer Probenlösung, die das Quecksilber in kationischer Form und als organische Verbindung enthält, mittels einer Nachweisvorrichtung (100; 200; 300), die eine Atomspektroskopievorrichtung mit einer zum Nachweisen von Quecksilbergas geeigneten Messzelle (102; 202; 302), eine Edelmetallanreicherungsvorrichtung (112; 212; 312) zur Konzentrierung des Quecksilbers und eine Kontrolleinheit (113; 213; 313) umfaßt, wobei das Quecksilber in die Gasphase überführt wird und mittels der Edelmetallanreicherungsvorrichtung anreicherbar ist, **dadurch gekennzeichnet, dass** die Kontrolleinheit (113; 213; 313) die Zuführung des gasförmigen Quecksilbers in die Messzelle (102; 202; 302) so steuert, dass zusätzlich zu der Messung des angereicherten Quecksilbers Quecksilbergas dergleichen Probe ohne Durchlaufen des Anreicherungsschritts in die Messzelle zur Messung eingeleitet wird.

2. Verfahren nach Anspruch 1, **dadurch gekennzeichnet, dass** das in der Probenlösung enthaltene Quecksilber durch Reduktion in die Gasphase überführt wird.

3. Verfahren nach Anspruch 2, **dadurch gekennzeichnet, dass** die das Quecksilber enthaltende Probe mit Natriumborhydrid reduziert wird.

4. Verfahren nach einem der Ansprüche 1 bis 3, **dadurch gekennzeichnet, dass** das Quecksilbergas ohne Durchlaufen des Anreicherungsschritts in die Messzelle eingeleitet wird, wenn die Kontrolleinheit bei einer vorhergehenden Messung des angereicherten Quecksilbergases das Überschreiten eines vordefinierten Schwellwertes detektiert hat.

5. Verfahren nach Anspruch 4, **dadurch gekennzeichnet, dass** die Kontrolleinheit aus dem Meßergebnis der beiden Messungen ein Gesamtergebnis ermittelt.

6. Verfahren nach einem der Ansprüche 1 bis 5, **dadurch gekennzeichnet, dass** die organische Quecksilberverbindung Methyhlquecksilber umfaßt.

7. Verfahren nach Anspruch 6, **dadurch gekennzeichnet, dass** Kontrolleinheit aus der Messung des direkt eingeleiteten Probengases und aus der Messung des aus der Anreicherungsvorrichtung eingeleiteten Probengases den Anteil an Methylquecksilber bestimmt.

8. Vorrichtung zum Nachweis von Quecksilber in einer Lösung mit
einem Gasphasenbereich (111; 211; 311), in dem das Quecksilber in der Lösung in die Gasphase überführbar ist,
einen Anreicherungsvorrichtung (112; 212; 312) zur Anreicherung des Quecksilbergases,
einer Atomspektroskopievorrichtung mit einer zum Nachweis von Quecksilber geeignet ausgebildeten Messzelle (102; 202; 302),
einer zum Einleiten des Quecksilbergases in die Messzelle dienenden Zufuhrleitung, und
einer mit der Messzelle in Verbindung stehenden Kontrolleinheit (113; 213; 313),
**dadurch gekennzeichnet, dass**
in der Zufuhrleitung ein mit der Kontrolleinheit (113; 213; 313) in Verbindung stehendes steuerbares Ventilelement (109; 209; 309) derart vorgesehen ist, dass das Quecksilbergas der gleichen Probenlösung in Abhängigkeit von der Kontrolleinheit wahlweise von dem Gasphasenbereich (111; 211; 311) mit oder unter Ausschluss der Anreicherungsvorrichtung (112; 212; 312) in die Messzelle (102; 202; 302) einleitbar ist.

9. Vorrichtung zum Nachweis von Quecksilber in einer Lösung mit
einem Gasphasenbereich (111; 211; 311), in dem das Quecksilber in der Lösung in die Gasphase überführbar ist,
einem Anreicherungsvorrichtung (112; 212; 312) zur Anreicherung des Quecksilbergases,
einer Atomspektroskopievorrichtung mit einer ersten zum Nachweisen von Quecksilber aus der Anreicherungsvorrichtung geeignet ausgebildeten Messzelle (102; 202; 302),
einer zum Einleiten des Quecksilbers in die erste Messzelle dienenden Zufuhrleitung, und
einer mit der ersten Messzelle in Verbindung stehenden Kontrolleinheit (113; 213; 313),
**dadurch gekennzeichnet, dass**
die Vorrichtung eine zweite Messzelle (350) umfaßt, die von der Kontrolleinheit ansteuerbar ist, so dass die zweite Messzelle mit Quecksilbergas direkt unter Ausschluss der Anreicherungsvorrichtung aus dem Gasphasenbereich beaufschlagbar ist.

10. Vorrichtung zum Nachweis von Quecksilber in einer Lösung nach Anspruch 8 oder 9, **dadurch gekennzeichnet, dass** der Gasenphasenbereich einen Reduktionsbereich aufweist, in dem das Quecksilber durch Reduktion in die Gasphase überführbar ist.

11. Vorrichtung zum Nachweis von Quecksilber in einer Lösung nach Anspruch 10, **dadurch gekennzeichnet, dass** der Reduktionsbereich mit einem Reduktionsmittel, insbesondere mit Natriumborhydrid beaufschlagbar ist.

12. Vorrichtung zum Nachweis von Quecksilber in einer Lösung nach einem der Ansprüche 8 bis 11, **dadurch gekennzeichnet, dass** die Kontrolleinheit geeignet ausgebildet ist, aus der Messung des Quecksilberanteils des Quecksilbergases aus der Anreicherungsvorrichtung und der Messung des Quecksilberanteils aus dem Gasphasenbereich einen Gesamtwert für den Gesamtquecksilberanteil zu bilden.

13. Vorrichtung zum Nachweis von Quecksilber in einer Lösung nach Anspruch 9, **dadurch gekennzeichnet, dass** die zweite Messzelle eine größere effektive Absorptionslänge aufweist als die Messzelle.

14. Vorrichtung zum Nachweis von Quecksilber in einer Lösung nach Anspruch 8, **dadurch gekennzeichnet, dass** die Messzelle mindestens zwei, miteinander verbindbare optisch gekoppelte Kammern aufweist.

15. Vorrichtung zum Nachweis von Quecksilber in einer Lösung nach Anspruch 14, **dadurch gekennzeichnet, dass** die Messzelle ein Schaltelement aufweist, mit dem die zumindest zwei Kammern, von der Kontrolleinheit steuerbar, verbindbar sind.

## Claims

1. A method of detecting mercury in a sample solution containing the mercury in cationic form and as an organic compound, by means of a detection device (100; 200; 300) comprising an atomic spectroscope provided with a measuring cell (102; 202; 302) adapted to detect mercury gas, a noble-metal concentrator (112; 212; 312) for concentrating the mercury, and a control unit (113; 213; 313), said mercury being converted into the gas phase and being adapted to be concentrated by means of the noble-metal concentrator, **characterized in that** the control unit 113; 213; 313) controls the supply of the gaseous mercury into the measuring cell (102; 202; 302) in such a way that, in addition to the measurement of the concentrated mercury, mercury gas of the same sample, which has not been subjected to the concentration step, is introduced in the measuring cell for the purpose of measurement.

2. A method according to claim 1, **characterized in that** the mercury contained in the sample solution is converted into the gas phase by reduction.

3. A method according to claim 2, **characterized in that** the sample containing the mercury is reduced by means of sodium hydridoborate.

4. A method according to one of the claims 1 to 3, **characterized in that** the mercury gas is introduced into the measuring cell without having been subjected to the concentration step, if the control unit has detected that a predefined threshold value has been exceeded in a preceding measurement of the concentrated mercury gas.

5. A method according to claim 4, **characterized in that** the control unit determines an overall result on the basis of the measurement results of the two measurements.

6. A method according to one of the claims 1 to 5, **characterized in that** the organic mercury compound comprises methyl mercury.

7. A method according to claim 6, **characterized in that** the control unit determines the amount of methyl mercury on the basis of the measurement of the directly supplied sample gas and on the basis of the measurement of the sample gas introduced from the concentrator.

8. A device for detecting mercury in a solution comprising
a gas phase area (111; 211; 311) in which the mercury in the solution can be converted into the gas phase,
a concentrator (112; 212; 312) for concentrating mercury gas,
an atomic spectroscope provided with a measuring cell (102; 202; 302) adapted to detect mercury,
a supply line which serves to introduce mercury gas into the measuring cell, and
a control unit (113; 213; 313) communicating with the measuring cell,
**characterized in that**
the supply line has provided therein a controllable valve element (109, 209; 309) communicating with the control unit (113; 213; 313), in such a way that, under the influence of the control unit, the mercury gas of the same sample solution can be introduced from the gas phase area (111; 211; 311) into the measuring cell (102; 202; 302) selectively with or without the concentrator (112; 212; 312).

9. A device for detecting mercury in a solution, comprising:
a gas phase area (111; 211; 311) in which the mercury in the solution can be converted into the gas phase,
a concentrator (112; 212; 312) for concentrating mercury gas,
an atomic spectroscope provided with a first measuring cell (102; 202; 302) adapted to detect mercury from the concentrator,
a supply line which serves to introduce mercury gas into the first measuring cell, and
a control unit (113; 213; 313) communicating with the first measuring cell,
**characterized in that** the device comprises a second measuring cell (350) which is controllable by the control unit so that said second measuring cell is adapted to have supplied thereto mercury gas directly from the gas phase area excluding the concentrator.

10. A device for detecting mercury in a solution according to claim 8 or 9, **characterized in that** the gas phase area comprises a reduction area in which the mercury can be converted into the gas phase by reduction.

11. A device for detecting mercury in a solution according to claim 10, **characterized in that** the reduction area is adapted to have supplied thereto a reducing agent, in particular sodium hydridoborate.

12. A device for detecting mercury in a solution according to one of the claims 8 to 11, **characterized in that** the control unit is adapted to determine a total value for the total amount of mercury on the basis of the measurement of the mercury content of the mercury gas supplied from the concentrator and on the basis of the measurement of the mercury amount supplied from the gas phase area.

13. A device for detecting mercury in a solution according to claim 9, **characterized in that** the an effective absorption length of the second measuring cell exceeds an effective absorption length of the measuring cell.

14. A device for detecting mercury in a solution according to claim 8, **characterized in that** the measuring cell comprises at least two optically coupled chambers which are adapted to be connected to one another.

15. A device for detecting mercury in a solution according to claim 14, **characterized in that** the measuring cell comprises a switching element by means of which the at least two chambers can be connected in a manner which is controllable by the control unit.

## Revendications

1. Procédé pour la détection de mercure dans une solution d'échantillon qui contient du mercure sous forme cationique et de composé organique, au moyen d'un dispositif de détection (100; 200; 300) comprenant un dispositif de spectroscopie atomique équipé d'une cellule de mesure (102; 202; 302) apte à détecter du gaz mercurieel, un dispositif de concentration de métal noble (112; 212; 312) pour la concentration du mercure, et une unité de contrôle (113; 213; 313), le mercure étant transformé en phase gazeuse et pouvant être concentré au moyen du dispositif de concentration de métal noble, **caractérisé en ce que** l'unité de contrôle (113; 213; 313) commande l'alimentation de la cellule de mesure (102; 202; 302) en mercure gazeux de telle manière que, en plus de la mesure du mercure concentré, du gaz mercuriel provenant du même échantillon est introduit pour la mesure dans la cellule de mesure sans passer par l'étape de concentration.

2. Procédé selon la revendication 1, **caractérisé en ce que** le mercure contenu dans la solution d'échantillon est transformé en phase gazeuse par réduction.

3. Procédé selon la revendication 2, **caractérisé en ce que** l'échantillon contenant le mercure est réduit au moyen de borohydrure de sodium.

4. Procédé selon l'une des revendications 1 à 3, **caractérisé en ce que** le gaz mercuriel est introduit, sans passer par l'étape de concentration, dans la cellule de mesure lorsque l'unité de contrôle a détecté, au cours d'une mesure antérieure du gaz mercurielconcentré, le dépassement d'une valeur de seuil préalablement définie.

5. Procédé selon la revendication 4, **caractérisé en ce que** l'unité de contrôle détermine un résultat global à partir du résultat de mesure des deux mesures.

6. Procédé selon l'une des revendications 1 à 5, **caractérisé en ce que** le composé de mercure organique comprend du mercure-méthyle.

7. Procédé selon la revendication 6, **caractérisé en ce que** l'unité de contrôle détermine la teneur en mercure-méthyle à partir de la mesure du gaz d'échantillon directement introduit et de ia mesure du gaz d'échantillon provenant du dispositif de concentration.

8. Dispositif pour la détection du mercure dans une solution, comprenant
une zone de phase gazeuse (111; 211; 311) dans laquelle le mercure se trouvant en solution, peut être transformé en phase gazeuse,
un dispositif de concentration (112; 212; 312) pour la concentration du gaz mercuriel,
un dispositif de spectroscopie atomique comprenant une cellule de mesure (102; 202; 302) apte à détecter du mercure,
un conduit d'alimentation servant à l'introduction du gaz mercuriel dans la cellule de mesure, et
une unité de contrôle (113; 213; 313) connectée à la cellule de mesure,
**caractérisé en ce que**
un élément de soupape commandable (109; 209; 309) étant en connexion avec l'unité de contrôle (113; 213; 313) est prévu dans le conduit d'alimentation de telle sorte que le gaz mercuriel provenant de la même solution d'échantillon peut être introduit, en fonction de l'unité de contrôle, dans la cellule de mesure (102; 202; 302) depuis la zone de phase gazeuse (111; 211; 311) au choix avec ou sans exclusion du dispositif de concentration (112; 212; 312).

9. Dispositif pour la détection du mercure dans une solution, comprenant
une zone de phase gazeuse (111;211;311) dans laquelle le mercure qui se trouve en solution, peut être transformé en phase gazeuse,
un dispositif de concentration (112; 212; 312) pour la concentration du gaz mercuriel,
un dispositif de spectroscopie atomique comprenant une première cellule de mesure (102; 202; 302) apte à détecter du mercure provenant du dispositif de concentration,
un conduit d'alimentation servant à l'introduction du gaz mercuriel dans la cellule de mesure, et
une unité de contrôle (113; 213; 313) connectée à la cellule de mesure,
**caractérisé en ce que**
le dispositif comprend une deuxième cellule de mesure (350) pouvant être commandée par l'unité de contrôle de sorte que la deuxième cellule de mesure peut être chargée de gaz mercuriel directement depuis la zone de phase gazeuse en excluant le dispositif de concentration.

10. Dispositif pour la détection du mercure dans une solution selon la revendication 8 ou 9, **caractérisé en ce que** la zone de phase gazeuse comprend une zone de réduction au sein de laquelle le mercure peut être transformé en phase gazeuse par réduction.

11. Dispositif pour la détection du mercure dans une solution selon la revendication 10, **caractérisé en ce que** la zone de réduction peut être chargée d'un moyen de réduction, en particulier de borohydrure de sodium.

12. Dispositif pour la détection du mercure dans une solution selon l'une des revendications 8 à 11, **caractérisé en ce que** l'unité de contrôle est agencée de manière à pouvoir former une valeur totale de la teneur totale en mercure à partir de la mesure de la teneur en mercure du gaz mercuriel provenant du dispositif de concentration, et de la mesure de la teneur en mercure du gaz mercuriel provenant de la zone de phase gazeuse.

13. Dispositif pour la détection du mercure dans une solution selon la revendication 9, **caractérisé en ce que** la deuxième cellule de mesure présente une longueur d'absorption effective plus grande que la cellule de mesure.

14. Dispositif pour la détection du mercure dans une solution selon la revendication 8, **caractérisé en ce que** la cellule de mesure comporte au moins deux chambres optiquement couplées et pouvant être connectées l'une à l'autre.

15. Dispositif pour la détection du mercure dans une solution selon la revendication 14, **caractérisé en ce que** la cellule de mesure comporte un élément de commutation au moyen duquel les au moins deux chambres, commandables par l'unité de contrôle, peuvent être reliées.
